# EUROPEAN PATENT APPLICATION

(11) **EP 2 408 228 A1**
(43) Date of publication of application: **18.01.2012**
(21) Application number: 11005684.3
(22) Date of filing: 12.07.2011
(51) Int. Cl.: H04W 24/08

(54) **Method and apparatus for handling measurement configuration and logging in a wireless communication system**

(30) Priority: 12.07.2010 US 363286 P; 07.07.2011 US 178205
(71) Applicant: HTC Corporation, Taoyuan County 330 (TW)
(72) Inventor: Wu, Chih-Hsiang, Taoyuan County 330 Tawain (CN)
(74) Representative: Wimmer, Hubert

(57) **Abstract**

A method and system for using a mobile device to collect and log network performance information operates by configuring the mobile device to automatically collect data about physical characteristics of the wireless network and log that data. The mobile device initially receives a performance measurement configuration from its registered cellular network. Based on the performance measurement configuration, the mobile device configures itself to automatically collect and log the network performance information relating to physical characteristics of the cellular network. While the collecting is ongoing, the mobile network changes the registered cellular network of the mobile device. In response to the change of the registered cellular network, the mobile device reconfigures to stop automatically collecting network performance information. If the mobile network selects a new cellular network but fails to register, the mobile device retains its configuration unchanged.

## Description

### CROSS-REFERENCE TO RELATED APPLICATION(S)

This application claims the benefit of U.S. Provisional Application No. 61/363,286, filed on July 12, 2010 and titled METHOD AND APPARATUS FOR HANDLING MEASUREMENT CONFIGURATION AND LOG IN A WIRELESS COMMUNICATION SYSTEM, which is incorporated herein by reference in its entirety.

### BACKGROUND

A cellular network consists of multiple base stations, each of which has a coverage area. Mobile devices, such as cellular phones, smart phones, tablets, and portable computers, wirelessly connect to these base stations to receive services such as data and voice connectivity. The extent of the coverage of a cellular network is defined by the reach of the individual base stations in the network and by the configuration of those base stations. Physical design considerations, such as transmission power, base station location, and antenna angle, are significant in determining the extent of coverage of the cellular network. In the past, a network provider could determine the extent and effectiveness of coverage of its networks only by sending technicians or testers into the field to test the coverage (e.g., strength of signal) at particular locations. End users had little opportunity to participate in improving the network, except by complaining to customer service. However, because of the large geographical extent of these cellular networks, it is difficult and expensive for network providers to perform extensive network testing by themselves. For this reason, standards organizations have recently developed mechanisms for using customer mobile devices to collect network information for use in evaluating network effectiveness. However, it is complicated to design this data collection mechanism in such a way that it is effective without wasting significant amounts of power in end user devices.

### BRIEF DESCRIPTION OF THE DRAWINGS

Figure 1 is a front view of a mobile device suitable for implementing a network performance logging system.

Figure 2 is a network diagram of a representative environment in which the network performance logging system operates.

Figure 3 is a high-level block diagram showing an example of the architecture of a device.

Figure 4 illustrates an exemplary environment in which a mobile device moves within the coverage area of a cellular network.

Figure 5 is an exemplary timing diagram of a message exchange between the network and the mobile device for carrying out the network performance logging.

Figure 6 is a logical block diagram of a network performance logging system.

Figure 7 is a flow chart of a process for carrying out network performance logging and reporting the logged information to the network.

Figure 8 is a flow chart of a process for logging network performance data when the mobile device temporarily connects to a different cellular network.

Figure 9 is a flow chart of a process for carrying out network performance logging when the mobile device joins and registers with a new cellular network.

### DETAILED DESCRIPTION

A method and system for using a mobile device to log network performance information for a cellular network is disclosed (hereinafter the "network performance logging system" or the "system"). The network performance logging system operates in a cellular network where the mobile device is configured to log network performance information relating to physical characteristics of the wireless network. At various times during operation, the mobile device connects with the cellular network and uploads network performance information logged over a period of time. A mobile device is initially configured to log this information based on a message from the cellular network. This may be, for example, a configuration message received when the mobile device initially connects to and registers with the mobile network. In general, the configuration message directs the mobile device to periodically log information relating to physical characteristics of the mobile network, such as current signal strength received from the current base station. The mobile device logs the information to a location in memory or long-term storage. In some embodiments, the mobile device is configured to log this network performance information only when it is operating in idle mode.

While this logging is ongoing, the mobile device may sometimes attempt to connect to a new cellular network. In these cases, the network performance logging system detects when the mobile device registers with a new cellular network. In response to detecting that the mobile device has registered with a new cellular network, the mobile device reconfigures its performance logging to clear or invalidate the performance measurement configuration. In some embodiments, this step includes clearing or stopping logging for the current configuration.

As a corollary to this, the mobile device will keep or validate its performance measurement configuration as long as its registered cellular network does not change. In particular, the mobile device will retain its configuration when it selects a new cellular network and attempts to connect to that network, as long as the mobile device is not successful in connecting to and registering with the new cellular network. In some embodiments, the mobile device will retain logged network performance information even after the corresponding performance measurement configuration has been cleared or invalidated.

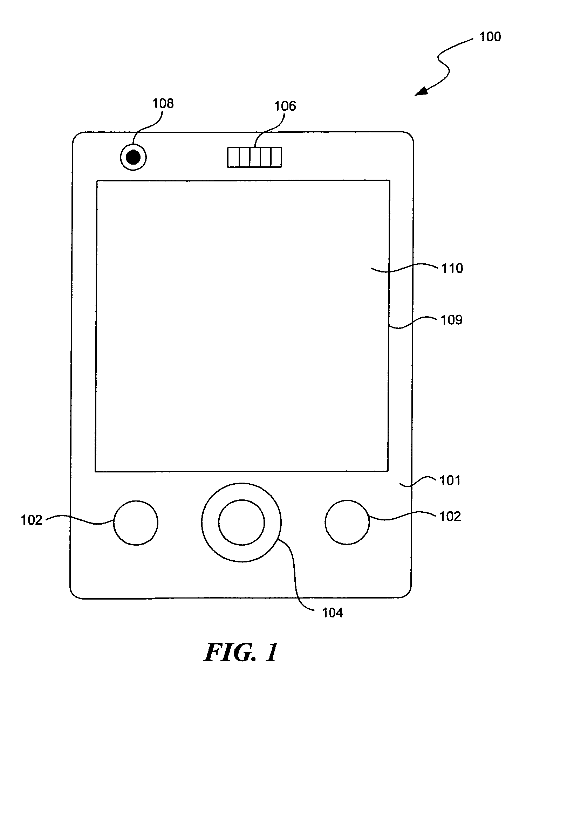

Figure 1 is a front view of a mobile device 100 suitable for implementing a network performance logging system. The term "mobile device," as used herein, may be a cell phone, a personal digital assistant (PDA), a portable email device (e.g., a Blackberry® device), a portable media player (e.g., an Apple iPod Touch®), a tablet or slate computer (e.g., an Apple iPad®), a netbook computer, a notebook computer, an e-reader, or any other device having wireless communication capability. As shown in Figure 1, the mobile device 100 may comprise a housing 101, a plurality of push buttons 102, a directional keypad 104 (e.g., a five-way key, a joystick, a trackball, or an optical mouse), a speaker 106, a camera 108, and a display 110 carried by the housing 101. The mobile device 100 may also comprise microphones, transceivers, photo sensors, and/or other computing components generally found in PDA devices, cellular phones, laptop computers, tablets, smart phones, handheld email devices, or other mobile communication/computing devices.

The display 110 may comprise a liquid-crystal display (LCD), a plasma display, a vacuum fluorescent display, a light-emitting diode (LED) display, a field emission display, and/or other suitable types of display configured to present a user interface. The mobile device 100 also comprises a touch sensing component 109 configured to receive input from a user. For example, the touch sensing component 109 may comprise a resistive, capacitive, infrared, surface acoustic wave (SAW), and/or other type of touch screen. The touch sensing component 109 may be integrated with the display 110 or may be independent from the display 110. In the illustrated example, the touch sensing component 109 and the display 110 have generally similarly sized access areas. In other examples, the touch sensing component 109 and the display 110 may have differently sized access areas. For example, the touch sensing component 109 may have an access area that extends beyond the boundaries of the display 110.

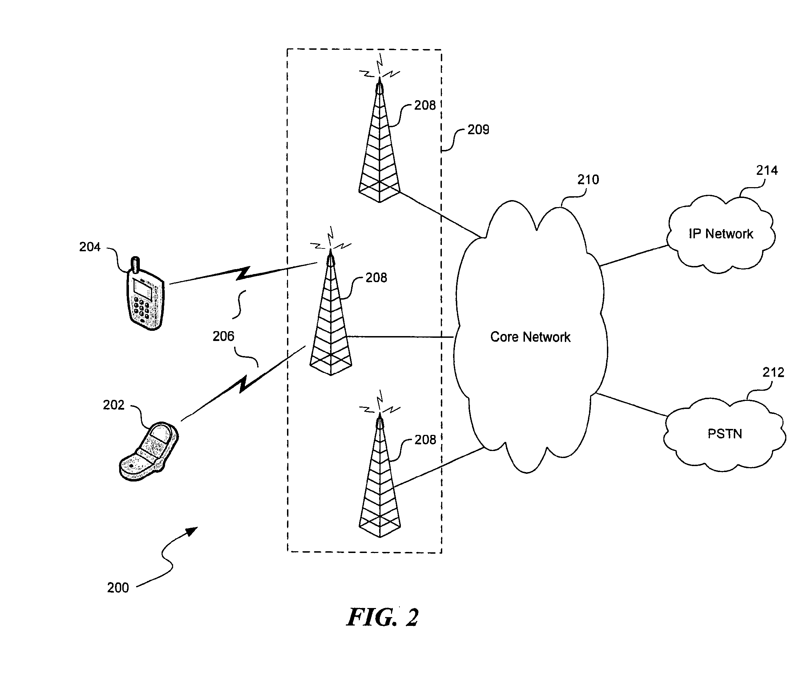

Figure 2 is a network diagram of a representative environment 200 in which the network performance logging system operates. Mobile devices 202 and 204 roam in an area covered by a radio access network (RAN) 209, such as UTRAN or EUTRAN. The mobile devices 202 and 204 are, for example, the mobile device 100 shown in Figure 1. The mobile devices 202 and 204 communicate to a base station 208 through a wireless connection 206. The wireless connection 206 could be implemented using any system for transmitting digital data. For example, the connection could use a cellular network implementing Global System for Mobile Communications (GSM), Universal Mobile Telephone Services (UMTS), Long-Term Evolution (LTE), or CDMA2000 or a non-cellular network implementing WiFi (IEEE 802.11) or Bluetooth.

The core network 210 operates with the RAN 209 to manage maintenance functionality, such as the network performance logging discussed below. The core network 210 is connected to a Public-Switched Telephone Network ("PSTN") 212, which provides a connection between the mobile devices 202 and 204 and remote telephones on another network. When a user of one of the mobile devices 202 and 204 makes a voice telephone call, the base station 208 routes the call through the core network 210 to the PSTN 212. The PSTN 212 then automatically connects the call to a remote telephone. If the remote telephone is another mobile device, the call is routed through a second radio access network's backhaul to another cellular transceiver.

The base station 208 is also connected through to an IP network 214, which provides a packet-based connection to remote devices supporting network applications. When the user of one of the mobile devices 202 and 204 communicates through a data connection, the base station 208 routes the packet data through the core network 210 to the IP network 214. The IP network 214 connects the core network 210 to remote devices, such as e-mail servers, web servers, and any other application generally available over IP networks such as the Internet.

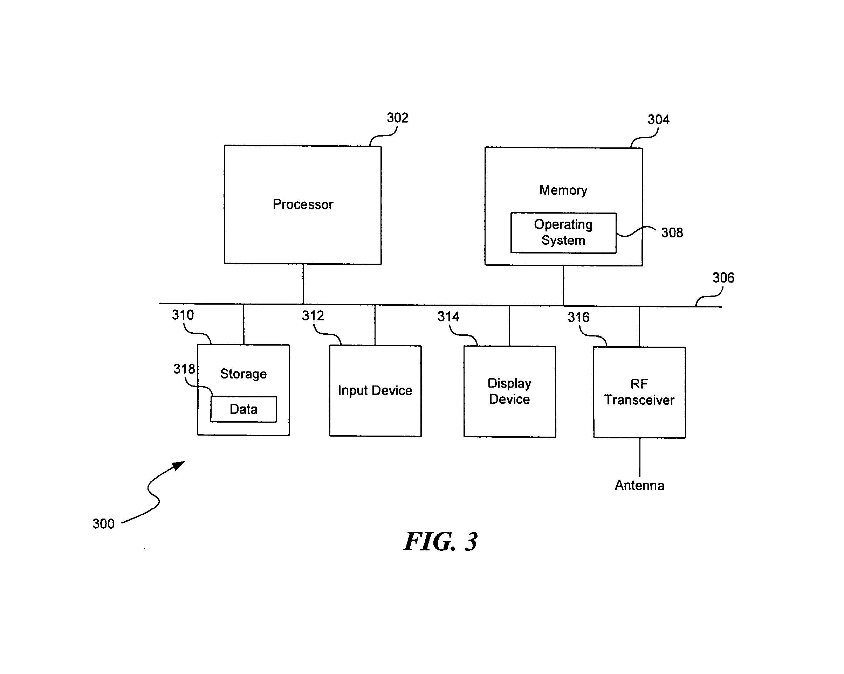

Figure 3 is a high-level block diagram showing an example of the architecture of a device 300. The device 300 may represent the mobile devices 202 and 204 of Figure 2. The device 300 comprises one or more processors 302 and memory 304 coupled to an interconnect 306. The interconnect 306 shown in Figure 3 is an abstraction that represents any one or more separate physical buses, one or more point-to-point connections, or both buses and point-to-point connections connected by appropriate bridges, adapters, or controllers. The interconnect 306, therefore, may comprise, for example, a system bus, a Peripheral Component Interconnect (PCI) family bus, a HyperTransport or industry standard architecture (ISA) bus, a small computer system interface (SCSI) bus, a universal serial bus (USB), a IIC (12C) bus, or an Institute of Electrical and Electronics Engineers (IEEE) standard 1394 bus, sometimes referred to as "Firewire."

The processor(s) 302 may comprise central processing units (CPUs) of the device 300 and, thus, control the overall operation of the device 300. In certain examples, the processor(s) 302 accomplish this by executing software or firmware stored in the memory 304. The processor(s) 302 may be, or may comprise, one or more programmable general purpose or special purpose microprocessors, digital signal processors (DSPs), programmable controllers, application-specific integrated circuits (ASICs), programmable logic devices (PLDs), or the like, or a combination of such devices.

The memory 304 is, or comprises, the main memory of the device 300. The memory 304 represents any form of fixed or removable random access memory (RAM), read-only memory (ROM), flash memory, or the like, or a combination of such devices. In use, the memory 304 stores, among other things, an operating system 308 of the device 300.

The device 300 comprises an input device 312, which enables a user to control the device. The input device 312 may comprise a keyboard, trackpad, touch sensitive screen (e.g., the touch sensing component 109 of Figure 1), or other standard computer input device. The device 300 also comprises a display device 314 suitable for displaying a user interface, such as the display 110 (Figure 1). The device 300 further comprises a radio frequency (RF) transceiver 316 that provides the device 300 with the ability to communicate with remote devices over a network and may be, for example, a wireless adapter. The device 300 may further comprise local storage 310 coupled to the interconnect 306. The local storage 310 may comprise, for example, a flash memory device that is configured to provide mass storage and that stores data 318 used by the mobile device.

In designing and maintaining a cellular network, a network provider must adjust a number of design parameters to ensure optimum coverage for the network. Examples of these parameters include number and location of base stations, transmission power of individual antennas of the base stations, and direction and angle of individual antennas of the base stations. For example, individual base stations generally have multiple antennas that can be arranged independently to ensure optimum coverage. A network provider may configure the base station by adjusting the power distribution among the multiple antennas to reduce power to an antenna that covers an area that is also well-covered by other base stations, while increasing power to an antenna that covers an area by itself.

However, it is often complicated and labor-intensive for a network provider to determine the optimum parameters for configuring its base stations. In the past, network providers have been required to send out technicians with measurement equipment to various locations to evaluate the network's performance. This is time-consuming and expensive. A particular problem arises when conditions in an area change after the base station is initially deployed. For example, the network provider might have measured the performance of a base station extensively when the base station was initially deployed, but it might not have been able to perform additional measurements afterwards. If a new building is built in an area, network performance might degrade in that particular area. However, the network provider might not become aware of that performance degradation for quite some time.

Because of this, organizations responsible for developing cellular standards developed procedures that allow the network providers to take advantage of data collected by end users' mobile devices. A particular example of this is the Minimization of Drive Tests (MDT) procedure developed by the 3rd Generation Partnership Project (3GPP), which is responsible for developing the GSM, UMTS, and LTE standards. The MDT procedure is described in various 3GPP standards documents, including 3GPP TS 37.320 v. 10.1.0 and ETSI TS 123.122 v. 9.3.0.

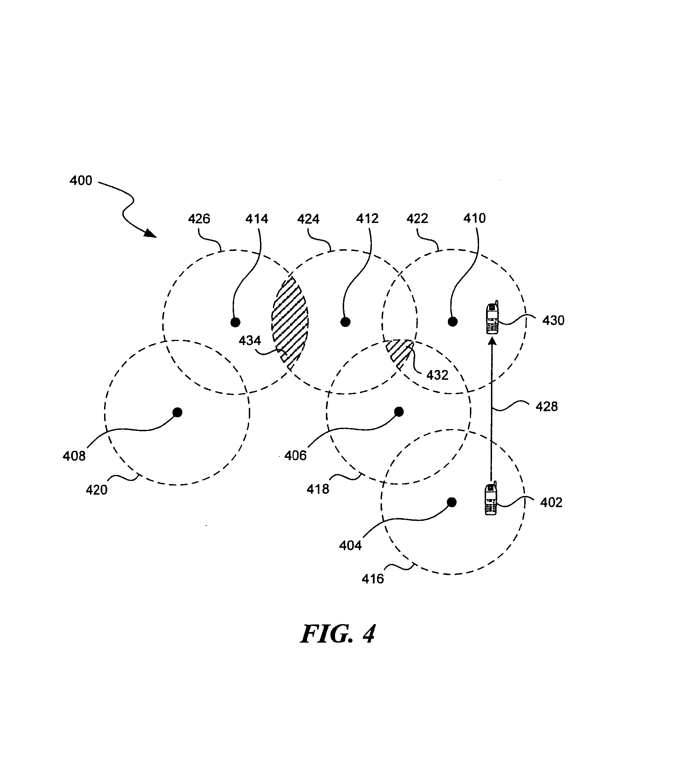

Figure 4 illustrates an exemplary environment in which a mobile device 402 moves within the coverage area of a cellular network 400. As shown in Figure 4, the cellular network 400 includes multiple base stations 404, 406, 408, 410, 412, and 414. Each of the base stations has a corresponding coverage area 416, 418, 420, 422, 424, and 426, respectively. The cellular network 400 is defined by the combination of these coverage areas. As shown in Figure 4, the cellular network 400 includes areas of high coverage, such as areas 432 and 434, where coverage areas from multiple base stations overlap. Similarly, the cellular network 400 includes multiple areas where there is no coverage at all because of limits of the range of individual base stations. Although not shown in the figure, a cellular network 400 may also include areas of limited coverage within the defined coverage areas 416, 418, 420, 422, 424, and 426 because of geographical features or buildings that interfere with coverage.

As shown in the figure, the mobile device 402 is initially located in coverage area 416, which is generated by base station 404. Over a period of time, the mobile device 402 moves along a path 428 to an endpoint 430 within the coverage area 422 generated by the base station 410. As part of its movement along the path 428, the mobile device 402 passes through an area of no coverage between the coverage area 416 and the coverage area 422. During its movement along the path 428, the mobile device 402 attempts to maintain a continuous connection to the network 400. As part of this process, the mobile device 402 detects and measures signals from nearby base stations. Network performance measurement procedures, such as MDT, take advantage of these activities by logging network performance information that is already being collected or can easily be collected with minimal extra effort. As used herein, "network performance information" refers to measurements of signal strength or quality measured by a mobile device during a measurement process.

In one type of MDT, referred to as "immediate MDT", the mobile device measures network performance information while in a connected state and reports the network performance information to the cellular network 400 in response to certain triggers or reporting conditions. This may occur, for example, when the mobile device 402 is connected for a voice call or for a data session.

In a second type of MDT, referred to as "logged MDT", the network directs the mobile device 402 to periodically log network performance information while it is operating in idle mode. That is, the mobile device 402 is directed to set a timer or use other methods to periodically log the network performance information. The time interval for logging the network performance information is generally selected so that it will not unduly drain the battery of the mobile device 402 or put an undue strain on the signaling capacity of the cellular network 400. The network performance information may include, for example, information on the signal strength received by the mobile device 402 from all of the base stations that it is able to detect.

After the mobile device 402 has generated a measurement, it logs the measurement to long-term storage, such as the local storage 310 (Figure 3). Along with the measurement, the mobile device 402 may store metadata associated with the measurement, such as the time and geographical location at which the measurement was taken. The metadata may also include information describing the type of device of the mobile device 402. This allows the network provider to account for variations in antenna quality and receiver quality for individual mobile devices.

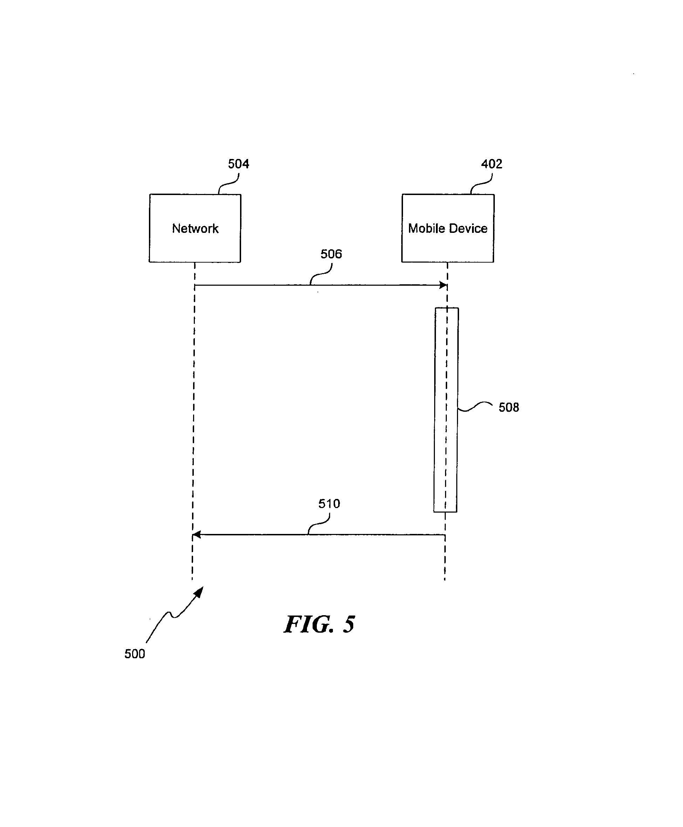

Figure 5 is an exemplary timing diagram of a message exchange 500 between the network and the mobile device for logging the network performance information. The message exchange 500 shows communication between a cellular network 504 and the mobile device 402. Although the network 504 is shown as a single entity, one skilled in the art will appreciate that the network 504 may consist of multiple distinct nodes, each of which may handle a portion of the functionality. For example, the network 504 may consist of a base transceiver station (BTS), which communicates wirelessly with the mobile device 402 but allows a higher-level component, such as a base station controller (BSC), to manage configuration and resource allocation for the mobile device 402.

In the message exchange 500, the network 504 initially sends a configuration message 506 to the mobile device 402. The configuration message 506 directs the mobile device 402 to configure itself to log network performance information and includes parameters to define the type and timing of the logging. The configuration message 506 may also specify an end time at which the mobile device 402 is directed to stop logging network performance information. The configuration message 506 may also direct the mobile device 402 to log only when it is within a specified geographical area. The configuration message 506 is sent when the mobile device 402 and the network 504 are engaged in some type of direct data communication, such as during a data session or a voice call. After the mobile device 402 has received the configuration message 506 and has configured itself as directed, the mobile device 402 then proceeds to carry out the logging of network performance information according to the parameters defined in the configuration message 506. This logging is indicated by block 508, which shows the time period during which the mobile device 402 is carrying out the logging. Although block 508 is shown as a continuous block, the mobile device 402 may be configured to log network performance information only at specified intervals and/or only when it is operating in idle mode. After logging for the time period of block 508, the mobile device 402 sends a reporting message 510 to the network 504. The reporting message 510 may be sent as part of a reconnection protocol in which the mobile device 402 attempts to initiate a new voice or data connection with the network 504. The reporting message 510 may be sent automatically by the mobile device 402 as part of the reconnection process, or the network may request the logging information as part of the setup process.

In current systems that carry out MDT logging, a problem arises in determining how long the mobile device should continue collecting data and how long it should retain its logged data. Current standards require that the MDT configuration and its corresponding log should be deleted at any time when the mobile device changes its current cellular network. However, in many cases this causes the mobile device to clear its data and configuration unnecessarily. This can result in the loss of useful data for the network providers.

For example, external conditions may temporarily cause the mobile device to lose contact with its network, such as when the user enters an elevator or goes through a tunnel. In these cases, the mobile device attempts to find a network to connect to as soon as the poor conditions go away, i.e., the user exits the elevator or comes out from the tunnel. In these cases, the mobile device may detect a new cellular network prior to finding its original cellular network. The mobile device then selects the new cellular network and attempts to connect with it. Under current standards, the mobile device clears its logging configuration and the associated log of network performance information as soon as it selects the new cellular network. However, in this situation, the mobile device will often fail to connect with the newly selected cellular network because it is not authorized to use the network. In addition, the mobile device will generally rediscover its original cellular network and reconnect instead with that network. In either case, all of the previous logging data and the measurement configuration will have been lost because of the brief period in which the mobile device selected the new cellular network.

A similar problem may occur when the mobile device attempts to connect with a closed subscriber group (CSG) base station. CSG base stations are a class of base stations that are available only to a subset of mobile devices. A common example of a CSG base station is a picocell or femtocell. These base stations are deployed by businesses or home users to extend coverage for a particular area, and access to these base stations is generally restricted to the individual customers. Thus, when an unauthorized mobile device attempts to connect to a CSG base station, the attempt is rejected because the mobile device is not a member of the correct group.

In all of these cases, a temporary failure to join a new network will result in the complete loss of both the measurement configuration and the collected network performance logging information. For this reason, it is desirable to have a system for determining when to start and stop logging that is more granular and less susceptible to these kinds of mistaken losses.

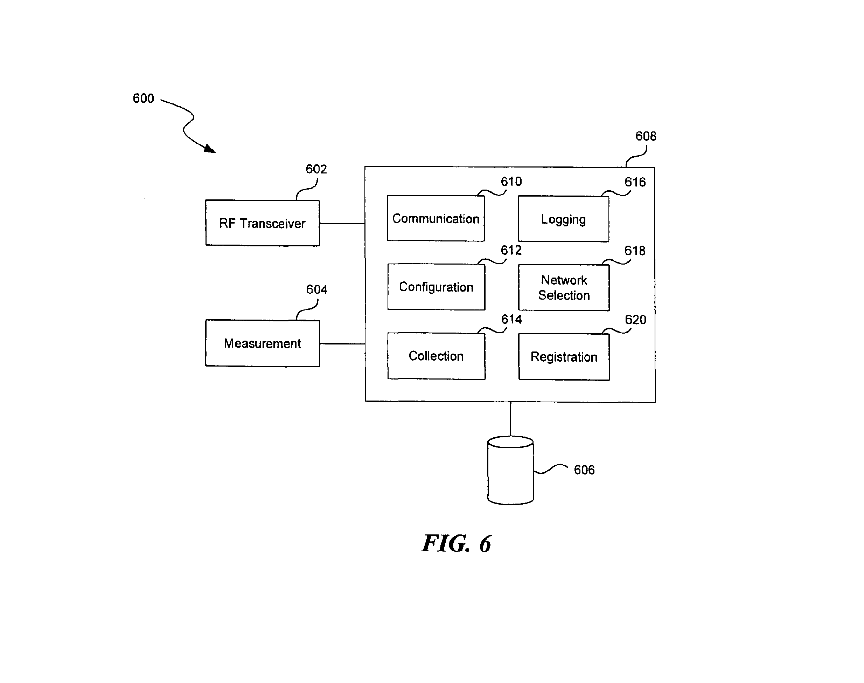

Figure 6 is a logical block diagram of a network performance logging system 600. The system 600 may be implemented by a computing device such as the mobile device 100 (Figure 1). Aspects of this system may be implemented as special purpose hardware circuitry, programmable circuitry, or a combination of these. As will be discussed in additional detail herein, the system 600 comprises a number of modules to facilitate the functions of the system. The modules and their underlying code and/or data may be implemented in a single physical device or distributed over multiple physical devices and the functionality implemented by calls to remote services. Similarly, data could be stored in local storage or remote storage and distributed in one or more physical devices. Assuming a programmable implementation, the code to support the functionality of this system may be stored on a computer-readable medium such as an optical drive, flash memory, or a hard drive. One skilled in the art will appreciate that at least some of these individual modules may be implemented using application-specific integrated circuits (ASICs), programmable logic devices (PLDs), or a general-purpose processor configured with software and/or firmware.

As shown in Figure 6, the system 600 comprises a RF transceiver 602, which provides a hardware interface to handle communication between the mobile device and the cellular network. The RF transceiver 602 may include an antenna and associated processing for carrying out wireless communications according to the standards supported by the network. The system 600 also includes a measurement device 604, which measures network performance information as directed by the performance measurement configuration received from the network. The system 600 also includes a storage component 606, which stores the performance measurement configuration and logged network performance information.

The system 600 also includes a processing component 608, which is configured to control the mobile device's configuration for logging network performance information and to execute the logging process. The processing component 608 includes various subcomponents to carry out its functionality. In particular, the processing component 608 includes a communication component 610, which uses the RF transceiver 602 to communicate with the cellular network. The communication component 610 exchanges configuration and reporting messages with the cellular network, including the messages discussed above with reference to Figure 5. The communication component 610 provides the configuration messages to a configuration component 612, which manages the system's performance measurement configuration. The configuration component 612 stores the performance measurement configuration in the storage component 606. Other components in the system use the configuration component 612 to store a new performance measurement configuration or to invalidate or clear an existing performance measurement configuration based on determinations made elsewhere in the system. This process is discussed in greater detail below.

The processing component 608 further includes a collection component 614, which is configured to collect network performance information using the measurement device 604. The collection component 614 collaborates with a logging component 616, which is configured to receive network performance information from the measurement device 604 and store the network performance information in a log in the storage component 606. The logging component 616 may also store related metadata in the log, such as the device type, the time that the measurement was taken, and the geographical location where the measurement was taken.

In some embodiments, the collection component 614 and the measurement device 604 make their measurements on a pilot tone that is broadcast by each base station. The pilot tone is a standardized signal that is broadcast at fixed power on a known frequency. The pilot tone may be the Broadcast Control Channel (BCCH) in GSM, the Primary Common Pilot Channel (P-CPICH) in UMTS Terrestrial Radio Access (UTRA) Frequency Division Duplexing (FDD), the Primary Common Control Physical Channel (P-CCPCH) in UTRA Time Division Duplexing (TDD) or a cell-specific reference signal in LTE. As a result, the pilot tone provides a useful baseline for evaluating the signal strength for the base station at a particular location. In these embodiments, the measurement device 604 and the collection component 614 tune to the pilot tone and measure its signal strength or other signal information. The collection component 614 then provides the signal information to the logging component 616, which stores the signal information, as well as the metadata, in the storage component 606.

The processing component 608 also includes a network selection component 618, which is configured to select a particular cellular network for the mobile device to attempt to access. The network selection component 618 operates at any time when the mobile device is searching for a new network to join. This may occur, for example, when the mobile device initially starts and is searching for a network to join. This may also occur when the mobile device loses contact with the network it was previously connected to. In these cases, the network selection component 618 directs the RF transceiver 602 to search for a new cellular network to join. The network selection component 618 then directs other components of the mobile device to set up communications and data exchange with the cellular network. The processing component 608 also includes a registration component 620, which is configured to register the mobile device with the cellular network selected by the network selection component 618.

The network selection component 618 and the registration component 620 control the two main steps that are carried out when a mobile device joins a cellular network. Initially, the network selection component 618 selects a new network to attempt to join. In this first step, the mobile device synchronizes with the base station for the selected cellular network and receives network parameters to be used in communicating with the network. In the second step, the registration component 620 exchanges messages with the new cellular network to register with the network as a device that can use that network's services. In this step, the mobile device and the new cellular network exchange messages according to a protocol specified by the relevant standard (e.g., GSM, UMTS, or LTE). As part of this process, the network determines whether the mobile device is authorized to register. This may include, for example, determining whether the mobile device is associated with a paying subscriber to the network. The network selection component 618 and the registration component 620 provide connection information to the configuration component 612 and the collection component 614. The components use this information to determine whether to change the mobile device's logging configuration and whether to retain existing logs of network performance information.

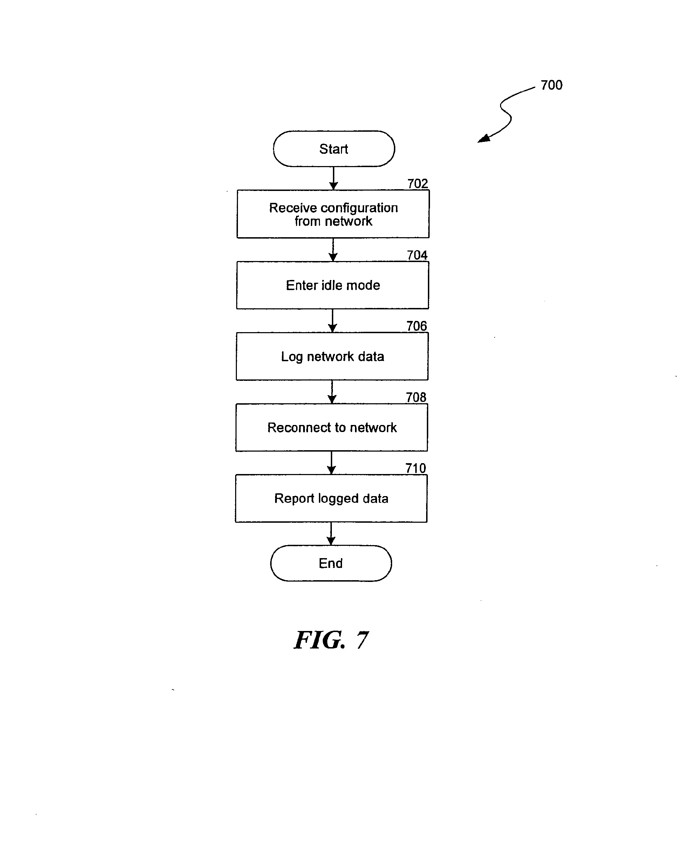

Figure 7 is a flow chart of a process 700 for logging network performance information and reporting the network performance information to a network (e.g. UTRAN or E-UTRAN). Processing begins at block 702, where the system receives a message from the network specifying a performance measurement configuration for the mobile device. The mobile device stores the performance measurement configuration in the storage component 606 and configures the collection component 614 and the logging component 616 with the logging parameters provided in the configuration message. As discussed above, the network generally transmits the performance measurement configuration in a control message (e.g. a RRC message) when the mobile device has a connection with the network.

Processing then proceeds to block 704, where the mobile device enters idle mode. A mobile device operates in idle mode when it is not actively engaged in any communications with the cellular network. In general, idle mode is a low power mode in which the device consumes the minimum power necessary to maintain contact with the network (e.g. receiving paging messages from the network). Processing then proceeds to block 706, where the mobile device collects and logs network performance data as directed by the measurement configuration received in block 702. In this step, the mobile device receives network performance information from the measurement device 604 and stores it in the storage component 606. As discussed above, the mobile device may also store metadata associated with the network performance information. In general, the mobile device measures network performance and logs the resulting information at an interval specified by the measurement configuration. The interval is generally selected so that the mobile device will collect information useful for the network provider while not draining the device's battery unnecessarily.

Processing then proceeds to block 708, where the mobile device opens a new connection to the cellular network. This step occurs when the mobile device leaves idle mode, where it was passively listening to the network, and attempts to open a new data or voice connection with the network. After the mobile device opens the new connection, processing proceeds to block 710, where the mobile device reports its logged data to the cellular network. Depending on the performance measurement configuration, the reporting of logged data may be spontaneously directed by the mobile device or carried out in response to a data request from the cellular network. After the logged data has been reported to the cellular network, the process ends. Alternatively, the mobile device may begin logging network performance information again when it next enters idle mode.

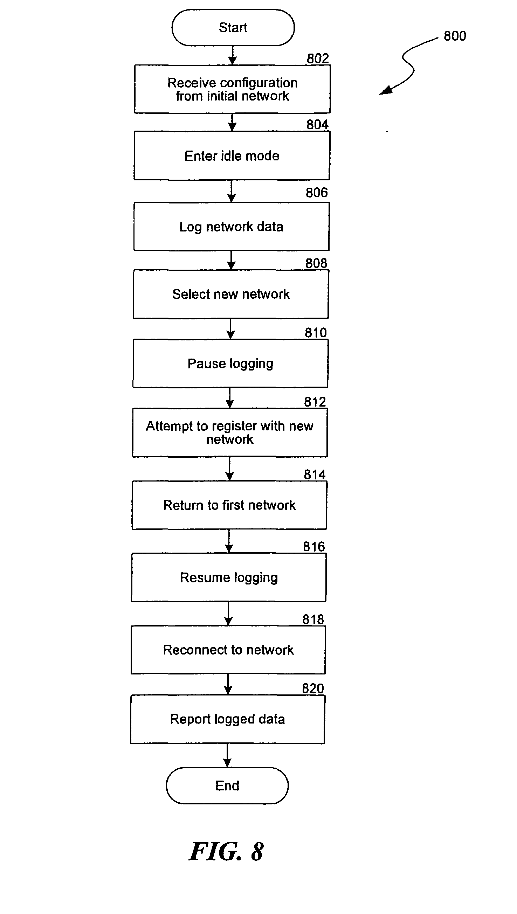

Figure 8 is a flow chart of a process 800 for logging network performance information when the mobile device temporarily connects to a different cellular network. Processing begins at block 802, where the system receives a configuration message from an initial network. The processing in this step is executed in a similar manner to the processing associated with block 702 of Figure 7. Processing continues at block 804, where the mobile device enters idle mode. Processing then proceeds to block 806, where the system collects and logs network performance information according to the methods discussed above.

Processing then proceeds to block 808, where the mobile device selects a new cellular network to connect to. In this step, the mobile device has selected the network to connect to, but has not yet attempted to register with or begin communications with the new network. Processing then proceeds to block 810, where the mobile device pauses its logging of network performance information. This avoids wasted effort and power in attempting to collect data for a network that the mobile device is not able to connect to. Processing then proceeds to block 812, where the mobile device attempts to register with the new mobile cellular network according to the methods discussed above.

According to the process 800, the mobile device fails in its attempt to register with the new mobile cellular network in block 812. This may occur because the mobile device is not authorized to register with the new mobile cellular network. Processing then proceeds to block 814, where the mobile device returns to the initial cellular network. In this step, the mobile device carries out the registration process to resume communications with the initial cellular network. Once the mobile device has successfully returned to the initial cellular network, processing proceeds to block 816, where the mobile device resumes logging network performance information. Because the mobile device did not successfully register with the new mobile cellular network, it did not modify the performance measurement configuration or change the log. Thus, the logging continues as it did before the mobile device selected the new mobile cellular network. As before, the mobile device generally logs the information when operating in idle mode. For simplicity, the step of entering idle mode has been omitted in the figure.

Processing then proceeds to block 818, where the mobile device opens a connection to the initial cellular network. As with block 708 of the process 700, this step occurs when the mobile device leaves idle mode, such as when opening a new voice or data connection with the network. Processing then proceeds to block 820, where the mobile device reports the logged data to the initial cellular network. After the reporting is complete, the system may continue logging or exit.

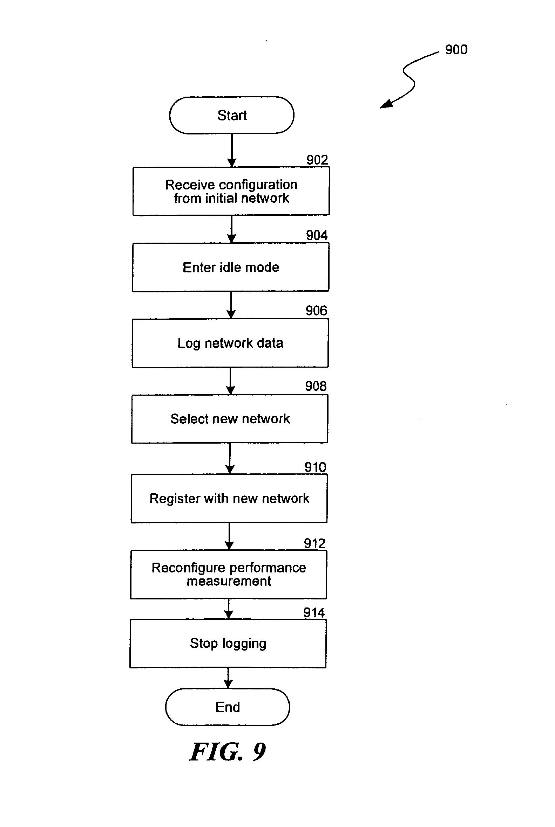

Figure 9 is a flow chart of a process 900 for logging network performance information when the mobile device joins and registers with a new cellular network. The process 900 begins in a similar manner to the process 800, as the mobile device receives a configuration message from the initial network (block 902), enters idle mode (block 904), and logs network data (block 906).

The logging then continues until a time when the mobile device attempts to move to a new cellular network. As discussed above, this may occur because the mobile device loses contact with the initial cellular network and enters the coverage area of a new cellular network that it can register with. In this case, processing proceeds to block 908, where the mobile device selects a new cellular network to connect to. Processing then proceeds to block 910, where the mobile device registers with the new cellular network according to the process described above.

After the mobile device registers with the new network, processing proceeds to block 912, where the mobile device may reconfigure itself to stop using the measurement configuration provided by the initial cellular network. The reconfiguration may include clearing the measurement configuration, i.e., erasing it from the mobile device's memory. Alternatively, the mobile device may invalidate the measurement configuration, i.e., mark the configuration in memory to indicate that the configuration is no longer valid. The mobile device may then validate the measurement configuration when the mobile device returns to the initial cellular network and continues logging the network performance information. Processing then proceeds to block 914, where the mobile device suspends logging network performance information for the first cellular network. In this step, the mobile device may also clear or invalidate the network performance information in the storage component. Alternatively, the mobile device may retain the network performance information in the storage component until it can be retrieved later (e.g., when the mobile device returns to the first cellular network).

One skilled in the art will appreciate that the system discussed above may be varied in a number of ways. For example, the mobile device may be configured to perform its logging only when operating in certain modes (e.g., idle mode only) or when operating in any mode. In the latter case, the mobile device would continue to log even when engaged in a data session with the cellular network. The mobile device may also be configured to maintain its measurement configuration separately from the logging information. That is, the system may be configured to retain the network measurement log even when its measurement configuration has been invalidated or cleared. On the other hand, the system may be configured to delete or clear the network measurement log at any time when the mobile device selects a new cellular network, even though it may retain the measurement configuration until the mobile device actually registers with that new cellular network.

From the foregoing, it will be appreciated that specific examples of the invention have been described herein for purposes of illustration, but that various modifications may be made without deviating from the spirit and scope of the invention. Accordingly, the invention is not limited except as by the appended claims.

## Claims

1. A computer-implemented method for managing automatic network performance measurement of a cellular network in a mobile device having a processor and a storage area, the method comprising:
receiving a performance measurement configuration from the cellular network, wherein the cellular network is a registered cellular network of the mobile device;
based on the performance measurement configuration, configuring the mobile device to automatically log network performance information for the cellular network in the storage area;
while the logging is ongoing, changing the registered cellular network of the mobile device; and
in response to changing the registered cellular network, reconfiguring the mobile device to suspend automatically logging the network performance information.

2. The method of claim 1, wherein the automatic logging of network performance information is a part of a Minimization of Drive Tests (MDT) procedure.

3. The method of claim 1, further comprising transmitting the logged network performance information to the cellular network in response to a request from the cellular network.

4. The method of claim 1, wherein reconfiguring the mobile device includes clearing or invalidating the performance measurement configuration.

5. The method of claim 1, further comprising:
after reconfiguring the mobile device, clearing or invalidating the logged network
performance information in the storage area.

6. The method of claim 1, further comprising:
during the logging, attempting to connect to a different cellular network;
determining that the attempt to connect to the different cellular network was unsuccessful; and
in response to determining that the attempt to connect to the different cellular network was unsuccessful, retaining the performance measurement configuration without modification.

7. A non-transitory computer-readable medium containing instructions for managing automatic network performance measurement of a cellular network in a mobile device having a processor and a storage area, by a method comprising:
receiving a performance measurement configuration from the cellular network, wherein the cellular network is a registered cellular network of the mobile device;
based on the performance measurement configuration, configuring the mobile device to automatically log network performance information for the cellular network in the storage area;
while the logging is ongoing, changing the registered cellular network of the mobile device; and
in response to changing the registered cellular network, reconfiguring the mobile device to suspend automatically logging the network performance information.

8. The computer-readable medium of claim 7, wherein the automatic logging of network performance information is a part of a Minimization of Drive Tests (MDT) procedure.

9. The computer-readable medium of claim 7, further comprising transmitting the logged network performance information to the cellular network in response to a request from the cellular network.

10. The computer-readable medium of claim 7, wherein reconfiguring the mobile device includes clearing or invalidating the performance measurement configuration.

11. The computer-readable medium of claim 7, the method further comprising:
during the logging, attempting to connect to a different cellular network;
determining that the attempt to connect to the different cellular network was unsuccessful; and
in response to determining that the attempt to connect to the different cellular network was unsuccessful, retaining the performance measurement configuration without modification.

12. A system for managing automatic network performance measurement of a cellular network in a mobile device, the system comprising:
a storage area;
a transceiver configured to communicate with the cellular network;
a processor coupled to the storage area and the network device;
a communication component configured to receive a performance measurement configuration from the cellular network, wherein the cellular network is a registered cellular network of the mobile device;
a logging component configured to automatically log network performance information for the cellular network in the storage area based on the performance measurement configuration;
a network selection component configured to change the registered cellular network of the mobile device while the logging is ongoing; and
wherein the logging component is further configured to suspend automatically logging the network performance information in response to the changing of the registered cellular network.

13. The system of claim 12, wherein the automatic logging of network performance information is a part of a Minimization of Drive Tests (MDT) procedure.

14. The system of claim 12, wherein suspending automatically logging includes clearing or invalidating the performance measurement configuration.

15. The system of claim 12, wherein the logging component is further configured to retain the performance measurement configuration without modification when the network selection component selects a new mobile cellular network and fails to register with the new mobile cellular network.
